# DEMANDE DE BREVET EUROPEEN

(11) **EP 3 293 072 A1**
(43) Date de publication de la demande: **14.03.2018**
(21) Numéro de dépôt: 17186635.3
(22) Date de dépôt: 17.08.2017
(51) Int. Cl.: B61J 3/12, B61C 17/06

(54) **MODULE D'ALIMENTATION D'UNE LOCOMOTIVE ÉLECTRIQUE DE VÉHICULE FERROVIAIRE**

(30) Priorité: 13.09.2016 FR 1658515
(71) Demandeur: ALSTOM Transport Technologies, 93400 Saint-Ouen (FR)
(72) Inventeur: CREUNET, Christophe, 67000 STRASBOURG (FR)
(74) Mandataire: Lavoix

(57) **Abrégé**

Le module d'alimentation (10) comporte un wagon (24) comportant des moyens (26) de liaison mécanique avec la locomotive électrique (12), et un dispositif d'alimentation électrique (30) porté par le wagon (24), et des moyens (42) de connexion électrique de puissance avec au moins une prise électrique (44) portée par la locomotive (12.

## Description

La présente invention concerne un module d'alimentation d'une locomotive électrique de véhicule ferroviaire.

Une locomotive électrique est généralement alimentée par une caténaire électrifiée. Toutefois, dans certains cas, la locomotive doit circuler sur une portion de voie ne comportant pas de caténaire. Cela est notamment le cas des locomotives de convoi de fret, qui circulent sur des voies dont les fins de voies ne comportent pas de caténaires.

Habituellement, pour circuler sur une telle voie, la locomotive électrique est retirée, et remplacée par une locomotive de traction diesel pour transporter le convoi de fret sur la fin de voie. Cette opération est généralement effectuée dans une station spécifiquement prévue à cet effet.

Cette opération est relativement lourde et longue à effectuer.

L'invention a notamment pour but de remédier à cet inconvénient, en fournissant des moyens pour faire circuler le véhicule ferroviaire sans nécessiter d'échanger sa locomotive.

A cet effet, l'invention a notamment pour objet un module d'alimentation d'une locomotive électrique de véhicule ferroviaire, caractérisé en ce qu'il comporte :
- un wagon comportant des moyens de liaison mécanique avec la locomotive électrique,
- un dispositif d'alimentation électrique porté par le wagon, et des moyens de connexion électrique de puissance avec au moins une prise électrique portée par la locomotive.

La locomotive électrique est reliée au wagon du module d'alimentation, et connectée électriquement au dispositif d'alimentation porté par ce wagon. Cela permet d'alimenter les chaînes de traction de la locomotive, sans nécessiter de caténaire.

La locomotive peut alors se déplacer sur une fin de voie dépourvue de caténaire, en poussant le module d'alimentation, tout en étant alimentée par ce dernier.

Le module d'alimentation selon l'invention permet donc de déplacer la locomotive, sans nécessiter d'opération lourde, ce module d'alimentation nécessitant uniquement une simple connexion avec la locomotive.

Un module d'alimentation selon l'invention peut comporter en outre l'une ou plusieurs des caractéristiques suivantes, prises seules ou selon toutes combinaisons techniquement envisageables.
- Les moyens de liaison mécanique comportent des tampons et un crochet, ou un dispositif de couplage automatique.
- La prise électrique est une prise selon le standard UIC, de préférence le standard UIC552.
- Le module d'alimentation comporte des moyens de connexion électrique de commande propres à être connectés à un système de contrôle et de gestion de la locomotive, pour la commande du dispositif d'alimentation depuis le système de contrôle et de gestion.
- Le module d'alimentation comporte des moyens de propulsion configurés pour déplacer le module d'alimentation sur une voie ferrée.
- Le dispositif d'alimentation électrique comporte une génératrice électrique alimentée en carburant, notamment en diesel.

L'invention concerne également un procédé de convoyage d'un véhicule ferroviaire comportant une locomotive électrique, caractérisé en ce qu'il comporte :
- le transport d'un module d'alimentation tel que défini précédemment, jusqu'à proximité de la locomotive,
- la liaison mécanique du module d'alimentation avec la locomotive,
- la connexion électrique d'une prise électrique de la locomotive avec le dispositif d'alimentation électrique, par l'intermédiaire des moyens de connexion électrique de puissance,
- l'alimentation de moteurs électriques de la locomotive par le dispositif d'alimentation électrique.

Avantageusement, le procédé comporte la connexion électrique des moyens de connexion électrique de commande à un système de contrôle et de gestion de la locomotive.

Avantageusement, le procédé comporte la commande du dispositif d'alimentation depuis la locomotive, et plus particulièrement depuis le système de contrôle et de gestion.

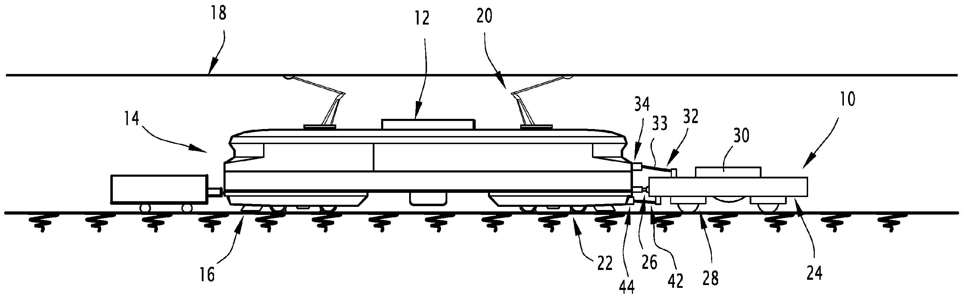

L'invention sera mieux comprise à la lecture de la description qui va suivre, donnée uniquement à titre d'exemple et faite en se référant à la figure annexée, représentant une vue de profil d'un module d'alimentation selon un exemple de mode de réalisation, connecté à une locomotive électrique de véhicule ferroviaire.

On a représenté, sur la figure, un module d'alimentation 10, pour l'alimentation d'une locomotive électrique 12 d'un véhicule ferroviaire 14.

Par exemple, le véhicule ferroviaire 14 est un convoi de fret formé par la locomotive 12 à laquelle une ou plusieurs voitures ferroviaires sont reliées.

En variante, le véhicule ferroviaire 14 comprend uniquement la locomotive 12.

Le véhicule ferroviaire 14 circule sur une voie ferrée 16 équipée de lignes de caténaire 18.

De manière classique, la locomotive électrique 12 est équipée de pantographes 20 propres à capter de l'énergie électrique depuis la ligne de caténaire 18 pour la transmettre à des moteurs électriques d'au moins un bogie motorisé 22, par l'intermédiaire d'une chaîne de traction.

Toutefois, les lignes de caténaire 18 ne s'étendent pas sur l'intégralité de la voie 16, et notamment, il n'y a pas de ligne de caténaire en fin de voie.

Le module d'alimentation 10 est destiné à alimenter la locomotive électrique 12 pour permettre sa circulation en cas d'absence de ligne de caténaire, notamment en fin de voie.

Le module d'alimentation 10 comporte un wagon 24 comportant des moyens 26 de liaison mécanique avec la locomotive électrique 12. Les moyens de liaison mécanique 26 sont classiques, et comportent par exemple des tampons et un crochet, ou en variante un dispositif de couplage automatique, tous moyens de liaison mécanique étant envisageables.

Le wagon 24 comporte des moyens 28 de propulsion configurés pour déplacer le module d'alimentation 10 sur la voie ferrée 16. Ces moyens de propulsion 28 permettent d'amener le module d'alimentation 10 jusqu'à la locomotive électrique 12. Ainsi, ces moyens de propulsion 28 sont assez puissants pour déplacer le module d'alimentation 10. Toutefois, ces moyens de propulsion 28 ne permettent pas le déplacement du véhicule ferroviaire 14.

Les moyens de propulsion 28 comportent par exemple au moins un bogie motorisé, de type classique.

Les moyens de propulsion 28 peuvent être commandés par des moyens de pilotage manuels, des moyens de pilotage à distance ou, conformément à une autre variante, des moyens de pilotage automatisés, par exemple configurés pour s'arrêter à proximité de la locomotive électrique 12.

Le module d'alimentation 10 comporte un dispositif d'alimentation électrique 30, porté par le wagon 24. Ce dispositif d'alimentation électrique 30 est de tout type envisageable.

Par exemple, le dispositif d'alimentation électrique 30 comporte une génératrice électrique alimentée en carburant, notamment en diesel.

Avantageusement, les moyens de propulsion 28 sont alimentés électriquement par le dispositif d'alimentation électrique 30.

Le module d'alimentation 10 comporte des moyens 42 de connexion électrique de puissance du dispositif d'alimentation électrique 30, avec au moins une prise électrique 44 portée par la locomotive 12. Une telle prise électrique 44 se situe habituellement à l'avant de la locomotive électrique 12.

Les moyens de connexion électrique de puissance 42 sont propres à transmettre à la locomotive 12 une énergie électrique pour la traction de la locomotive 12.

Par exemple, la prise électrique 44 est une prise selon le standard UIC, déjà présente sur la locomotive électrique 12. De préférence, la prise électrique 44 suit le standard UIC552.

L'énergie électrique fournie par le dispositif d'alimentation électrique 30, et récupérée via la prise électrique 44, est utilisée pour alimenter les moteurs électriques des bogies moteurs 22, permettant ainsi le déplacement du véhicule ferroviaire 14, sans nécessiter de ligne de caténaire 18.

Avantageusement, le module d'alimentation 10 comporte des moyens de connexion électrique de commande 32 propres à être connectés à un système de contrôle et de gestion du train (TCMS, acronyme anglais pour « Train Control Monitoring System ») via une prise 34 portée par la locomotive. Ainsi, il est possible de commander le dispositif d'alimentation 30 depuis la locomotive 12, et plus particulièrement depuis le système de contrôle et de gestion.

Les moyens de connexion électrique de commande 32 comprennent, par exemple, un câblot 33 propre à être connecté à la prise 34.

Le module d'alimentation 10 selon l'invention permet de réaliser un procédé de convoyage du véhicule ferroviaire 14, qui va maintenant être décrit.

Lorsque le véhicule ferroviaire 14 arrive sur une zone ne comportant pas de ligne de caténaire, notamment en fin de voie, il est mis à l'arrêt, ne pouvant pas continuer son déplacement.

Le procédé comporte alors le transport d'un module d'alimentation 10 tel que décrit précédemment, jusqu'à proximité de la locomotive 12. A cet effet, le module d'alimentation 10 était stocké dans l'attente du véhicule ferroviaire 12, sur la voie 16 ou sur une voie de garage connectée à la voie 16.

Le module d'alimentation 10 est transporté grâce à ses moyens de propulsion 28. Il est piloté manuellement, à distance, ou automatiquement, en fonction des moyens de pilotage employés.

Une fois à proximité de la locomotive 12, le module d'alimentation 10 est relié mécaniquement à cette locomotive 12, grâce aux moyens de liaison mécanique 26. Cette liaison mécanique est réalisée de manière connue en soi.

Par ailleurs, le dispositif d'alimentation électrique 30 est connecté électriquement à la locomotive 12, par l'intermédiaire des moyens de connexion électrique de puissance 42 et de la prise électrique 44.

Le dispositif d'alimentation électrique 30 est également relié au système de contrôle et de gestion du train pour former une UM (Unité Multiple) via la prise 34 et le câblot 33. Ce système de contrôle et de gestion prend ainsi le contrôle du module d'alimentation 10, et notamment du dispositif d'alimentation électrique 30.

Le système de contrôle et de gestion donne alors l'ordre au dispositif d'alimentation électrique 30 de fournir de l'énergie électrique via les moyens de connexion électrique de puissance 42.

Les moteurs électriques de chaque bogie moteur 22 de la locomotive 12 sont ainsi alimentés par le dispositif d'alimentation électrique 30, si bien que la locomotive 12, entraînant le véhicule ferroviaire 14 et poussant le module d'alimentation 10, peut se déplacer.

Il apparait ainsi clairement que le module d'alimentation 10 permet aisément au véhicule ferroviaire 14 de se déplacer en l'absence de ligne de caténaire, sans nécessiter de remplacer sa locomotive 12.

On notera que l'invention n'est pas limitée au mode de réalisation précédemment décrit, mais pourrait présenter diverses variantes complémentaires.

## Revendications

1. Module (10) d'alimentation d'une locomotive électrique (12) de véhicule ferroviaire (14), **caractérisé en ce qu'**il comporte :
- un wagon (24) comportant des moyens (26) de liaison mécanique avec la locomotive électrique (12),
- un dispositif d'alimentation électrique (30) porté par le wagon (24), et des moyens (42) de connexion électrique de puissance avec au moins une prise électrique (44) portée par la locomotive (12).

2. Module d'alimentation (10) selon la revendication 1, dans lequel les moyens de liaison mécanique (26) comportent des tampons et un crochet, ou un dispositif de couplage automatique.

3. Module d'alimentation (10) selon la revendication 1 ou 2, dans lequel la prise électrique (44) est une prise selon le standard UIC, de préférence le standard UIC552.

4. Module d'alimentation (10) selon l'une quelconque des revendications précédentes, comportant des moyens de connexion électrique de commande (32) propres à être connectés à un système de contrôle et de gestion de la locomotive (12), pour la commande du dispositif d'alimentation (30) depuis le système de contrôle et de gestion.

5. Module d'alimentation (10) selon l'une quelconque des revendications précédentes, comportant des moyens de propulsion (28) configurés pour déplacer le module d'alimentation (10) sur une voie ferrée (16).

6. Module d'alimentation (10) selon l'une quelconque des revendications précédentes, dans lequel le dispositif d'alimentation électrique (30) comporte une génératrice électrique alimentée en carburant, notamment en diesel.

7. Procédé de convoyage d'un véhicule ferroviaire (14) comportant une locomotive électrique (12), **caractérisé en ce qu'**il comporte :
- le transport d'un module d'alimentation (10) selon l'une quelconque des revendications 1 à 6, jusqu'à proximité de la locomotive (12),
- la liaison mécanique du module d'alimentation (10) avec la locomotive (12),
- la connexion électrique d'une prise électrique (44) de la locomotive (12) avec le dispositif d'alimentation électrique (30), par l'intermédiaire des moyens de connexion électrique de puissance (42),
- l'alimentation de moteurs électriques (22) de la locomotive (12) par le dispositif d'alimentation électrique (30).

8. Procédé de convoyage selon la revendication 7, au moyen d'un module d'alimentation selon la revendication 4, le procédé comportant la connexion électrique des moyens de connexion électrique de commande (32) à un système de contrôle et de gestion de la locomotive.

9. Procédé de convoyage selon la revendication 8, comportant la commande du dispositif d'alimentation (30) depuis la locomotive (12), et plus particulièrement depuis le système de contrôle et de gestion.
